# EUROPEAN PATENT SPECIFICATION

(11) **EP 3 370 843 B1**
(45) Date of publication and mention of the grant of the patent: **28.08.2019**
(21) Application number: 16797957.4
(22) Date of filing: 02.11.2016
(51) Int. Cl.: B01D 33/044, B01D 33/23, B01D 35/14

(54) **FILTER ELEMENT AND FILTER APPARATUS**
FILTERELEMENT UND FILTERVORRICHTUNG
ÉLÉMENT FILTRANT ET APPAREIL DE FILTRATION

(30) Priority: 03.11.2015 FI 20155794
(43) Date of publication of application: 12.09.2018
(73) Proprietor: Outotec (Finland) Oy, 02230 Espoo (FI)
(72) Inventor: EKBERG, Bjarne, 20360 Turku (FI); VÄNTTINEN, Kari, 02330 Espoo (FI); ILLI, Mika, 01700 Vantaa (FI)
(74) Representative: Kolster Oy Ab
(86) International application number: PCT/FI2016/050763
(87) International publication number: WO 2017/077183

(56) References cited:
- WO-A1-2011/060254
- WO-A1-2014/108602
- US-A1- 2011 089 092
- US-A1- 2013 180 911

## Description

### BACKGROUND

The present invention relates to a filter element.

The present invention further relates to a filter apparatus.

Filtration is a widely used process whereby a slurry or solid liquid mixture is forced through a media, with the solids retained on the media, as a cake, and the liquid phase passing through. This process is generally well understood in the industry. Examples of filtration types include depth filtration, pressure and vacuum filtration, and gravity and centrifugal filtration.

The most commonly used filter media for vacuum filters are filter cloths and coated media, e.g. the ceramic filter medium.

The use of a cloth filter medium requires heavy duty vacuum pumps, due to vacuum losses through the cloth during cake deliquoring. The ceramic filter medium, when wetted, does not allow air to pass through due to a capillary action. This decreases the necessary vacuum level, enables the use of smaller vacuum pumps and, consequently, yields significant energy savings.

Common for the rotary vacuum filter apparatuses is a great number of filter elements. Thus the length of the service life of the filter elements is a fundamental factor of efficient use of the rotary vacuum filter apparatuses.

### BRIEF DESCRIPTION

Viewed from an aspect, there can be provided a filter element comprising at least one filter member forming a capillary filter, an internal cavity in fluid communication with the filter member, and a flow channel arranged in fluid communication with the internal cavity for placing the internal cavity in fluid communication with a drainage line of the filter apparatus, the filter element further comprising a pressure shock absorbing element that is reversibly deformable and connected to the internal cavity, the pressure shock absorbing element arranged to change its volume under a positive pressure shock taking place in the internal cavity.

Thereby a filter element having an extended service life may be achieved.

Viewed from another aspect, there can be provided a filter apparatus comprising at least one filter element according to any one of claims 1 to 11 wherein the filter apparatus comprises at least one of the following: a disc filter apparatus, and a belt filter apparatus. Thereby a filter apparatus the use of which is more economical than known filter apparatuses may be achieved.

Some other embodiments are characterised by what is stated in the other claims.

### BRIEF DESCRIPTION OF THE FIGURES

Some embodiments illustrating the present disclosure are described in more detail in the attached drawings, in which
Figure 1 illustrates a frame member of a filter element for a filter apparatus in perspective view;
Figure 2 illustrates a frame member of another filter element for a filter apparatus in perspective view;
Figure 3a is a side view of a disc filter element;
Figure 3b is a cutaway view of the disc filter element shown in Figure 3a;
Figure 4a is a schematic side view of another disc filter element;
Figure 4b is a cutaway view of the disc filter element shown in Figure 4a;
Figure 5 is a perspective top view illustrating a disc filter element,
Figure 6 is a perspective top view illustrating a disc filter element a filter member disconnected,
Figure 7 is a perspective top view illustrating a belt filter element,
Figure 8 is a perspective top view illustrating a disc filter apparatus,
Figure 9 is a side view illustrating the disc filter apparatus shown in Figure 8,
Figure 10 is a perspective view of a belt filter apparatus.

In the figures, some embodiments are shown simplified for the sake of clarity. Similar parts are marked with the same reference numbers in the figures.

### DETAILED DESCRIPTION

Principles of the embodiments can be applied for drying or dewatering fluid materials in any industrial processes, particularly in mineral and mining industries. In embodiments described herein, a material to be filtered is referred to as slurry, but embodiments are not intended to be restricted to this type of fluid material. The slurry may have high solids concentration, e.g. base metal concentrates, iron ore, chromite, ferrochrome, copper, gold, cobalt, nickel, zinc, lead and pyrite.

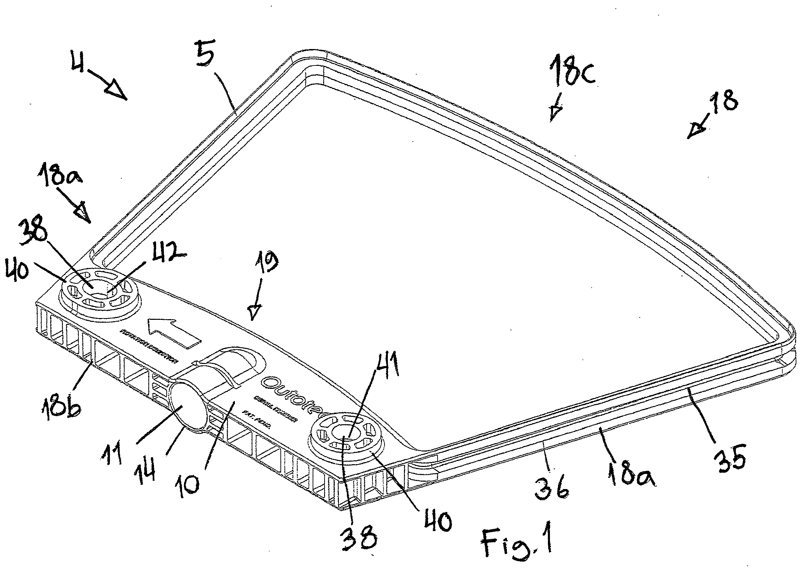

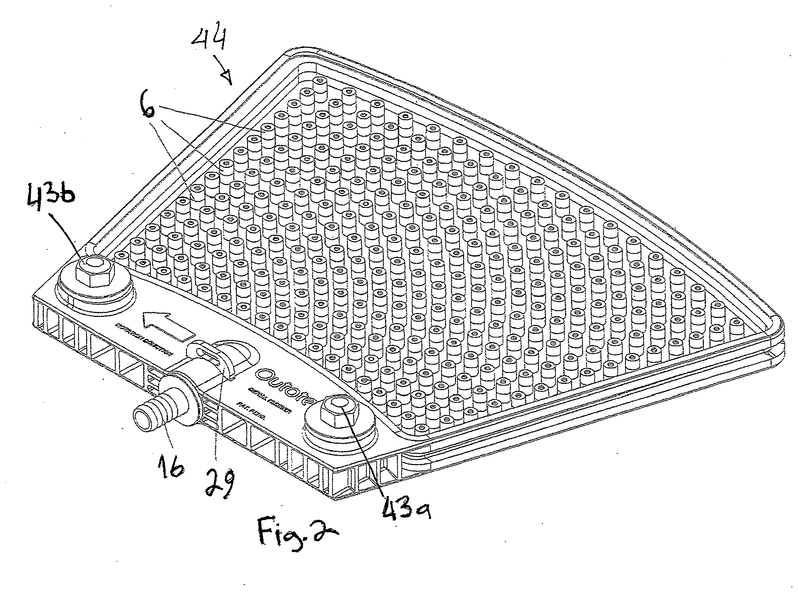

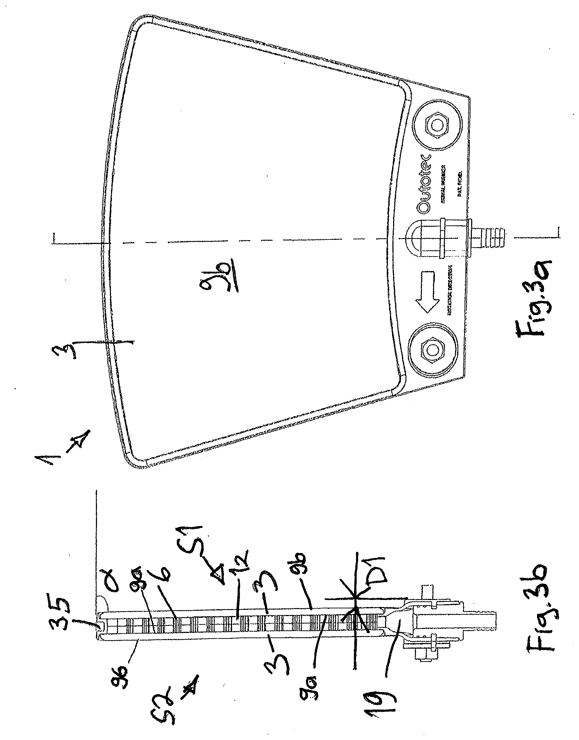

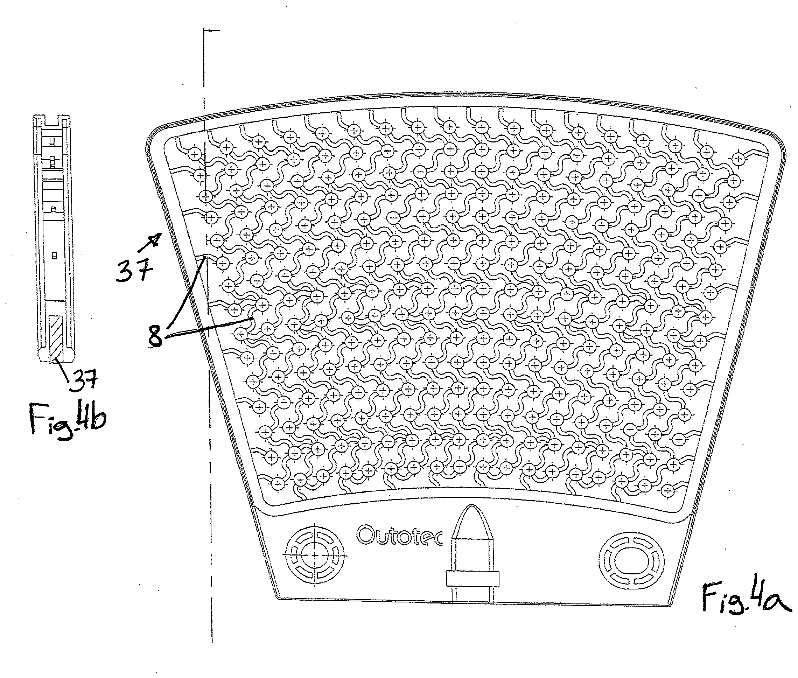

Figure 1 illustrates a frame member 4 of a filter element 1 for a filter apparatus 2 and Figure 2 illustrates a frame member 4 of another filter element 1 for a filter apparatus 2. Figure 3a is a side view of a disc filter element 1 and Figure 3b is a cutaway view of the disc filter element shown in Figure 3a. Figure 4a is a schematic side view of another disc filter element, and Figure 4b is a cutaway view of the disc filter element shown in Figure 4a.

The filter element 1 may comprise at least one filter member 3. Typically the filter element comprises at least two filter members 3, one on the first side and another on the second side of the filter element 1. It is to be noted that in Figure 1 the filter element 1 is shown without the filter members 3.

According to an embodiment, the disc filter element 1 is a truncated-sector-shaped filter element 1, comprising second or outer filter surfaces 9b on both sides of the element 1.

The filter element 1 may comprise at least one filter member 3. The filter member 3 may comprise a permeable membrane layer and have a first filter surface 9a for receiving a pressure. The pressure may comprise a negative pressure during filtering of a feed, whereby the negative pressure provides suction on the first filter surface 9a. On the other hand, the pressure may comprise a positive pressure during counterwashing or backwashing of the filter element 1, such as backwashing. The first filter surface 9a may be directed towards an internal cavity 12 arranged inside the filter element 1. According to an embodiment, the internal cavity 12 may be used to collect liquid filtered by the filter element 1 and guide the liquid to a drainage line of the filter apparatus. The negative pressure during filtering may, thus, be provided inside the internal cavity 12.

The filter member 3 may further comprise a second filter surface 9b for receiving solid particles filtered from a feed.

The filter member 3 may form a capillary filter. A capillary filter refers to a filter, wherein the structure and/or the material of the filter, such as the filter member 3, enables a certain amount of liquid, such as water, to be kept in the filter by a capillary action. The liquid may be kept in micro-pores provided in the filter member 3, for example. Such a capillary filter enables the liquid to be filtered to easily flow through the filter member 3, but when all free liquid has passed through the filter member 3, the remaining liquid kept in the filter by the capillary action prevents flow of gas, such as air, through the wet filter member 3. The capillary action thus does not participate in the dewatering itself, for instance by sucking water out of the slurry. In other words, in a capillary filter liquid, usually water, may be kept in the micro-pores of the filter member 3 by capillary forces and no flow of gas takes place after the free water in the residue, such as the cake, has been removed. According to an embodiment, the filter member 3 formed as a capillary filter prevents air from entering the internal cavity 12.

The filter element 1 may further comprise a frame member 4 arranged to support the at least one filter member 3 in such a manner that the internal cavity 12 is formed.

In embodiments, where the filter member 3 and frame member 4 are provided as separate structural parts, materials of the filter member 3 and the frame member 4 can be selected independently. Thereby, the suitability of the materials for each part of the filter element can be evaluated separately and materials and their properties, such as lightness and degree or permeability, can be selected based on the specific requirements of each part. For instance, a filter element 1 can be provided that is light and at the same time durable to withstand changes in pressure related to vacuum being provided inside the filter element 1 during filtering and positive pressure being provided inside the filter element 1 during cleaning and/or maintenance.

According to an embodiment, the filter member 3 may comprise a material comprising micro-pores and the frame member 4 may comprise a material that does not comprise micro-pores. The frame member 4 may, thus, comprise a non-porous material. According to such an embodiment, filter elements 1 of more uniform quality may be provided, as this enables more automized work phases to be used instead. For instance manual coating, like painting for example, for closing the micro-pores in the parts of the frame member where the micro-pores are not beneficial or are not desirable can be avoided. According to an embodiment, the frame member 4 may comprise a material that does not let the liquid to be filtered through.

According to an embodiment, the frame member 4 may comprise at least one support part 6 for supporting the filter member 3. This enables providing a more durable structure of the filter element. According to a further embodiment, the frame member 4 may comprise a plurality of support parts 6. In such a filter element 1, the durability can be further improved and/or the flow of the filtered liquid inside the cavity 12 can be optimized.

According to an embodiment, the frame member 4 may comprise a plurality of support parts 6 spaced from other support parts 6, such that the support parts 6 do not transfer forces to one another. In embodiments, where the frame member 4 and filter member 3 arranged in contact with one another comprise materials with different thermal expansion coefficients, forces, such as torsional forces, may occur. These forces may be accumulated if continuous contact surfaces with large cross-section are formed, such as when a single support part 6 with a large cross-section in contact with the filter member 3 is provided. These forces may, for instance, compromise the durability of the filter element 1 and if the support parts 6 are arranged to one another in such a manner that these forces may be transferred between them, failure in one of the support parts 6 may accumulate while transferring to other support parts 6. A plurality of support parts 6 spaced from one another can be provided instead to avoid the transfer of forces between the support parts 6. Thus, problems related to thermal expansion can be avoided and the material(s) of the filter member 3 and the frame member 3, such as the material(s) of the support parts 6, can be selected more freely. In some embodiments, in other hand, the material(s) of the filter member 3 and frame member 4 may be selected to avoid or minimize problems related to thermal expansion instead of or in addition to structural means.

According to another embodiment, the frame member 4 may comprise one support part 6 to support the filter member 3. According to one embodiment, such a support part may 6 extend on the outer part of the filter member 3 and support the filter member 3 on the edges of the filter member 3. According to another embodiment, such a support part 6 may be positioned on the middle area of the filter member 3 supporting the filter member 3 substantially at the middle of the filter member 3.

According to an embodiment, the frame member 4 may comprise at least one support part 6 and the sum of the cross-sectional areas of a filter member end 44 of the support parts 6 may be in the range of 5 per cent to 60 percent, preferably in the range of 10 per cent to 40 per cent, and more preferably in the range of 15 per cent to 25 per cent, of the sum of the areas of the first filter surfaces 9a of the filter members 3 arranged on the same side of the internal cavity 12 and at the filter member end 44 of the support parts 6. For instance, a filter element 1 can be provided that endures a negative pressure inside the internal cavity 12 during filtering process, and a positive pressure inside the internal cavity 12 during cleaning/maintenance of the filter element.

According to an embodiment, the structure of the frame member 4 may be formed to prevent transfer of forces, such as torsional forces, between the support parts 6. Thus, problems caused by thermal expansion can be avoided or decreased by structural means instead of or in addition to by the properties of the materials the filter element 1 comprises. This provides an improved and long-lasting solution for avoiding the effect of forces, for example torsional forces, that might compromise the durability of the filter element 1. In addition to thermal expansion, these forces may comprise mechanical forces caused by loads, changes in the negative and/or positive pressures inside and outside the filter element 1 or some other features related to the use of the filter element 1, for example.

According to an embodiment, each support part 6 may be connected to at least one other support part 6 by a connector 8 comprising a curved shape. Such a structure comprising support parts connected to one other is easy to handle during assembly, for example, while the curved shape of the connectors 8 effectively decrease the transfer of forces between the support parts 6.

According to an embodiment, at least one of the support parts 6 may be connected to at least one of the other support parts 6 by a connector 8 that does not transfer forces or at least decreases the transfer of forces between the support parts 6. Such a connector 8 may comprise a connector 8 that is formed as flexible in at least one direction. The flexibility may be provided by selection of the material of the connector 8 and/or by making the connector 8 so thin that it cannot transfer considerable forces between the support parts 6.

According to an embodiment, the support parts 6 are not connected to one another, but are only in contact with the filter members 3. Such support parts 6 can be formed to be easy to manufacture and modular, such that similar support parts 6 can be used in different kind of filter element configurations. This can save in number and cost of molds, for example. Still, a filter element 1 that is light and durable to stand both positive and negative pressures inside the internal cavity 12 during use and maintenance and/or that works well in different temperatures during manufacturing and use can be provided.

According to an embodiment, the number of support parts 6 on a square meter of first filter surface 9a may be in the range of 50 to 4000 support parts 6. A most suitable number of support parts 6 depends on the embodiment, such as the type of the filter apparatus and the purpose it is used for, and the cross-sectional area of each individual support part 6. For instance, according an embodiment where the support parts 6 comprise a round cross-section, a number of support parts 6 on a square meter of first filter surface 9a may be in the range of 1000 to 4000 support parts 6, preferably in the range of 1500 to 2500 support parts 6. According to an embodiment where the support parts 6 comprise an elongated cross-section, a number of support parts 6 on a square meter of first filter surface 9a may be in the range of 50 to 400 support parts 6, preferably in the range of 100 to 200 support parts 6.

According to an embodiment, the cross-sectional area of each support part 6 is in the range of 0.5 to 3000 square centimeter.

By selection of a suitable number and/or cross-sectional area of the support parts 6 optimal flow of the filtered liquid and sufficient support for the filter member(s) 4 to withstand pressures during use and maintenance can be enabled.

According to an embodiment, at least one support part 6 may comprise an aperture extending through the support part 6 between the filter member end 44 of the support part 6 and the end of the support part 6 opposite to the filter member end 44 in a direction substantially parallel to the direction of the first filter surface 9a. In other words, the aperture may extend in a transverse direction between the ends of the support part. In embodiments, where the filter element 1 may be used in a disc filter apparatus, the support part may have two filter member ends, one towards each one of the filter members arranged at opposite ends of the support part 6. In such embodiments, the end of the support part 6 opposite to the filter member end 44 may, naturally, also comprise a filter member end. Such aperture may enable better flow of the filtered liquid within the internal cavity 12.

According to an embodiment, the frame member 4 may comprise an edge part 5 comprising a peripheral edge surface 18 that is arranged at an angle α in relation to the first filter surface 9a. In Figure 3b the angle α is 90 degrees or close to it, but in other embodiments the angle α might differ from a right angle. The edge part 5 refers to a part of an edge of the frame member 4 extending on one or more edges of the frame member 4. In some embodiments, this edge part 5 and the at least one filter member 3 may at least partly define the internal cavity 12. The edge part 5 may comprise a part extending on the connecting member end 10 of the filter element 1 and/or the distal end of the filter element 1 opposite to the connecting member end and/or one of the sides S1, S2 (shown in Figure 3b) of the filter element 1 extending between the ends of the filter element 1. This enables supporting the filter member(s) 3 also on the edges of the filter element 1 for a better durability and/or forming the internal cavity 12 within the filter element 1. Additionally, such an edge part 5 may also be formed of a different type of a material, such as a non-porous material, to avoid leaking of liquids from the internal cavity 12 towards the edges of the filter element 1.

According to an embodiment, the frame member 4 may comprise a different material or combination of materials than the filter member(s) 3. According to an embodiment, the frame member 4 may have a thermal expansion coefficient different from that of the filter member 3.

According to an embodiment, the filter member 3 may comprise a ceramic material or a composition comprising a ceramic material. Using a ceramic material or a composition comprising a ceramic material in the filter member(s) 3, very good filtering properties may be achieved. These materials are a**lso** wear resistant and hydrophilic.

According to an embodiment, the ceramic material may comprise alumina (Al₂O₃), aluminium silicates, silicon carbide and/or titania (TiO₂).

According to an embodiment, the filter member 3 may comprise at least one of the following: a polymer material, a composition comprising a polymer material and a metal.

According to an embodiment, the frame member 4 may comprise a polymer material or a composition comprising a polymer material. This enables making the frame member 4 and, thus, the filter element 1 light, avoiding the frame absorbing water that would increase the weight of the frame member 4 and the filter element 1 in use and/or providing more flexibility in the frame member 4 and, therefore, the filter element 1. The polymer material may comprise a thermoplastic, for example. The thermoplastic may comprise at least one of the following: polyamide (PA), polyolefin, such as polypropylene (PP), polysulphone (PSU), polyethersulphone (PES), polyphenyleneoxide (PPO), polyphenylenesulphide (PPS) and acrylo-butadiene-styrene (ABS), polybutylene terephthalatate (PBT), polycarbonate (PC), and polyolefins, such as polypropylene (PP), polyethylene (PP), e.g. high density polyethylene (HDPE). The thermoplastics may be particularly suitable for molding such frame member 4 structures. According to another embodiment, the polymer material may comprise a thermoset plastic, for instance an epoxy, a polyurethane or a polyester.

According to an embodiment, at least the surface of the support parts 6 comprises the polymer material. A polymer material may be used for instance to provide smooth surfaces minimizing the effect of the support parts 6 on the flow of the filtered liquid.

According to a further embodiment, the frame member may comprise metal.

According to an embodiment, the edge part 5 of the frame member 4 may comprises a material that differs from the material of the support parts 6. In other words, parts of the frame member 4 may comprise different materials or combinations of materials. This enables selection of a material most suitable for each structural part of the frame member 4 from part-specific requirement point of view.

According to another embodiment, the edge part 5 of the frame member 4 may comprise the same material as the material of the support parts 6. This ensures that the parts of the frame member 4 have the same thermal expansion coefficient, which helps avoiding forces being formed between the edge part 5 and the support parts 6.

According to an embodiment, at least one filter member 3 may be arranged fixedly to the frame member 4. According to an embodiment, the at least one filter member 3 may be glued or melted fixedly to the frame member 4. These methods of fixedly arranging filter member 3 to the frame member 4 can provide a durable bond, be beneficial from manufacturing point of view and/or provide a filter element 1 that is light and durable when vacuum (= negative pressure) or pressure (= positive pressure) is provided inside the internal cavity 12. According to an embodiment, the at least one filter member 3 may be arranged fixedly to at least one support part 6 of the frame member 4. This may additionally help avoiding problems related to thermal expansion.

According to an embodiment, at least a part of at least one surface of the filter member may be formed as a rough joining interface 7 comprising a grit number lower than or equal to 180, preferably comprising a grit number in the range of 40-180, more preferably comprising a grit number in the range of 60 to 120. This enables a more durable bond between a ceramic material and the frame member material to be provided. According to an embodiment, at least a part of the surface of the filter member formed as a rough joining interface may be in contact with the frame member. This is beneficial, as a tough joining surface makes the ceramic material easier to join durably to the frame member material.

According to an embodiment, the filter element may comprise at least one filter member 3 arranged on each side of the frame member 4 providing two first filter surfaces 9a, one on each side of the frame member 4. Such a filter element 1 may be suitable for a disc filter apparatus and the filtering surface may be doubled. A known type of a filter element may, thus, be provided that is easier to manufacture than the known configurations and enables automized manufacturing process and equipment with less or no need for manual work phases enabling more uniform quality.

According to an embodiment, each end of a support part 6 may be arranged fixedly to one of said filter members 3, such that the support part 6 is arranged fixedly between two filter members 3. This is particularly beneficial in connection for filter members 3 and filter elements 1 suitable for use in connection with a disc filter apparatus. Then, a more durable bond and filter element structure may be provided. Also the risk of the filter element 1 structure failing during back washing of the filter element, in other words cleaning with positive pressure provided on the first filter surface 9a, can be decreased.

According to an embodiment, the strength of the connection between a support part 6 and a filter member 3 may be in the range of 200 to 400 N per support part 6. Such a filter element 1 can withstand the pressures during use and maintenance, for example backwashing.

According to an embodiment, the filter element 1 may be a truncated-sector-shaped filter element 1 of a disc filter apparatus and comprising filter surfaces 9 on both sides of the element 1. Such a filter element is suitable for a disc filter apparatus. Thus, a complicated structure may be manufactured in an easier manner and/or a more uniform quality may be achieved by automized manufacturing.

According to an embodiment, the filter element 1 may be a filter element 1 of a drum filter apparatus. Such a filter element 1 may comprise a pair of side edge surfaces 18a arranged parallel with each other, and comprising second filter surface(s) 9b only on one side of the filter element 1. Such a filter element 1 may further comprise a pair of curved end surfaces 18d, wherein the curvature of the curved end surfaces 18d and the curvature of the second filter surface(s) 9b of said filter element 1 coincide with the circumference of the outer surface of a drum filter of the drum filter apparatus 2. Such a filter element 1 may help manufacturing a known, complicated filter element structure more easily, as the filter member can be manufactured separately and arranged to the "box".

According to an embodiment, the filter element (1) is a filter element (1) of a belt filter apparatus.

According to an embodiment, the total area of second filtering surface(s) 9b of one filter element 1 may be greater than or equal to 0.1 square meters. The total area of second filtering surface(s) 9b of one filter element 1 suitable for use in a disc filter apparatus may preferably be in the range of 0.1 square meters to 2 square meters, and more preferably in the range of 0.2 square meters to 1 square meters. The total area of second filtering surface(s) 9b of one filter element 1 suitable for use in a belt filter apparatus may preferably be in the range of 0.5 square meters to 5 square meters, and more preferably in the range of 1 square meter to 3 square meters. Thus, such a filter element 1 can be sufficient for production environment.

According to an embodiment, at the least one frame member 4 may comprise between a connecting member end 10 of the frame member 4 and the filter member 3 a material that is more flexible than the material of the filter member 3, wherein the connecting member end 10 of the frame member is the end at which the filter element 1 is arrangeable to the filter apparatus (2). In other words, the frame member may comprise such a flexible material in the vicinity of the connecting member end, that is at least a part of the frame member 4 extending between the connecting member end 10 and the filter member(s) 3 may comprise such flexible material. This helps enabling the filter element 1 to bend when arranged in contact with a scraper (not shown) of the filter apparatus to avoid damage caused by the scraper to the filter element. This is particularly beneficial in embodiments, where the filter member comprises a ceramic material, as ceramic material is typically rigid and the flexibility is particularly important in connection with filter member(s) 3 comprising such a rigid material. According to an embodiment, the more flexible material may reversibly flexible. When flexible material is reversible flexible, machine could be used even after hit as the hit would not deform the filter element 1 permanently. According to another embodiment, the more flexible material may be non-reversible flexible. This might be sufficient in some embodiments, as even if the more flexible material would be only non-reversibly flexible, it could still make it possible to avoid a domino effect in filter apparatus breaking also adjacent filter elements even if the certain plate would be damaged. Flexible material may comprise a polymeric material or a composition comprising a polymeric material.

According to an embodiment, the frame member 4 may comprise between the connecting member end 10 of the frame member 4 and the filter element(s) a plastic portion comprising a plastic material. According to an embodiment, the plastic portion may comprise identification information for filter element 1 identification purposes.

According to an embodiment, the at least one frame member 4 may form at least the outer edge surface 18c of the filter element 1. The outer edge surface 18c of the filter element 1 may be located at the opposite end of the filter element 1 compared to the connecting member end 10 of the filter element 1 at which the filter element 1 is arrangeable to the filter apparatus 2. At least the outer edge surface 18c of the frame member 4 may comprise a non-porous and acid-resistant material. The frame member 4 may, thus, extend from the outer edge surface 18c towards the connecting member end 10.

The filter element 1 comprises the at least one filter member 3, and an internal cavity 12 in fluid communication with the filter member 3.

The filter member 3 may form a capillary filter. A capillary filter refers to a filter, wherein the structure and/or the material of the filter, such as the filter member 3, enables a certain amount of liquid, such as water, to be kept in the filter by a capillary action despite a differential pressure formed by a gas surrounding said filter member. The liquid may be kept in micro-pores provided in the filter member 3, for example. Such a capillary filter enables the liquid to be filtered to easily flow through the filter member 3, but when all free liquid, such as the free liquid entering the filter member 3 from the (filter) cake formed thereon, has passed through the filter member 3, the remaining liquid kept in the filter by the capillary action prevents flow of gas, such as air, through the wet filter member 3. The capillary action thus does not participate in the dewatering itself, for instance by sucking water out of the slurry. In other words, in a capillary filter liquid, usually water, may be kept in the micro-pores of the filter member 3 by capillary forces and no flow of gas takes place after the free water in the residue, such as the cake, has been removed. According to an embodiment, the filter member 3 formed as a capillary filter prevents air from entering the internal cavity 12.

According to another embodiment, the bubble point of the filter member 3 is at least 0.2 bar. In this context, the bubble point refers to an effective bubble point. The effective bubble point describes a pressure difference between the first filter surface 9a and the second filter surface 9b, at which 1 liter of air flows through one square meter of the second filter surface 9b during a one minute time. In other words, when in such a filter member a 0.2 bar pressure difference is provided between the outside of the filter element 1 and the inside of the filter element 1, such as within the internal cavity 12, a maximum of 1 liter of air should be able to pass through a square meter of the second filter surface of the filter member 3 during a one minute time. If a flow of air through the filter member 3 at 1 liter per minute requires a pressure difference of 0.2 bar or greater, the bubble point of the filter member 3 is thus at least 0.2 bar. Thereby, in embodiments where it is not practical to block the flow of air completely, only a very minor amount of air may be able to flow through the filter member 3 when the cake is being dried. When the cake is being dried, an underpressure is provided within the filter element 1, such as within the internal cavity 12, which means than the pressure inside the filter element 1 is lower that the pressure outside the filter element 1.

According to an embodiment, at least 600 liter of water per an hour and per one square meter of the second filter surface 9b may be able to pass through the filter member 3 when a pressure difference of 1 bar is provided between the first filter surface 9a and the second filter surface 9b. Thus, a sufficient amount of water may flow through the filter member 3 to provide efficient filtering of the slurry, especially when the actual filtering takes place. During filtering, an underpressure is provided within the filter element 1, such as within the internal cavity 12, which means that the pressure inside the filter element 1 is lower than the pressure outside the filter element 1.

The pressure difference between the inside of the filter element 1 and the outside of the filter element 1 may be greater during the actual filtering than during the drying of the cake. The drying of the cake may take place for instance in a disc filter apparatus 2 when the filter element 1 in question has passed the filtering position, such as the lowest position in the filter 15 and rotated back upwards. In other words, a specific filter element 1 participates in the actual filtering at a different point of time and at a different position in the filter apparatus 2 than in the drying of the cake. Thus, the relevant pressure difference for the actual filtering and the drying of the cake may be different from one another.

The structure of the filter member 3, such as the mean pore size of the filter member 3, affects both the effective bubble point and the flow of water through the filter member 3.

The filter element 1 further comprises a flow channel 19 arranged in fluid communication with the internal cavity 12 for placing the internal cavity 12 in fluid communication with a drainage line 13 of the filter apparatus 2. Furthermore, the filter element 1 may comprise a pressure shock absorbing element 20 that is reversibly deformable and connected to the internal cavity 12. Said pressure shock absorbing element 20 is arranged to change its volume under a positive pressure shock taking place in the internal cavity 12.

The positive pressure may appear in the in the internal cavity 12 during cleaning and/or maintenance of the filter element 1, such as backwashing.

When the filtering process is on, there is a negative pressure in the internal cavity 12 providing suction on the first filter surface 9a of the filter member 3. Under the influence of the vacuum, the cake forms onto the second filter surface 9b of the filter member 3. The cake is dried and removed from the second filter surface 9b, after which the filter medium is backwashed e.g. with the filtrate. The pressure affecting in the internal cavity 12 changes quickly from vacuum (e.g. 0.9 bar) to the positive pressure (e.g. 1.5 - 3.0 bar). In the internal cavity 12, the filtrate flows back with high velocity (e.g. 3 - 5 m/s). As the filtrate fills the internal cavity 12, the kinetic energy thereof releases and causes a momentary pressure peak. This repeatedly occurring pressure peak may lead to the breakage of the filter element 1. This pressure peak may be absorbed at least substantially by the pressure shock absorbing element 20.

According to an embodiment, the pressure shock absorbing element 20 is arranged out of the internal cavity 12 of the filter element 1, e.g. in the frame member 4 of the element as shown as shown in Figure 3.

An advantage may be that the pressure shock absorbing element 20 does not obstruct flow of filtrate in the internal cavity 12.

Regarding a filter element of a disc filter apparatus, the shock absorbing element 20 may be arranged in the connecting member end 10 as shown as shown in Figure 3.

An advantage is that usually the connecting member end 10 has plenty of room in which the shock absorbing element 20 can be arranged easily. It is to be noted, however, that the shock absorbing element 20 can be located freely inside or outside the filter element 1 as long as it is in contact with or connected to the internal cavity.

The shock absorbing element 20 may comprise a housing 32 and an inner room 33 in said housing 32. The housing 32 may be a hollow reservoir made of a polymer material. This kind of shock absorbing element 20 is inexpensive and easy to realize in various shapes.

According to another embodiment, the housing 32 is filled with a porous material that e.g. gives mechanical support for the reservoir.

The inner room 33 of the housing is in a fluid communication with the internal cavity 12 such that the housing 32 is able to expand by the positive pressure shock taking place in the internal cavity 12. In other words, the housing 32 is like air balloon that expands its volume as a result of rising inside pressure.

According to an embodiment, the volume of the element 12 may be e.g. 1 - 10 % of the volume of the internal cavity 12.

According to another embodiment, the pressure shock absorbing element 20 is arranged out of the internal cavity 12 as discussed above, but it comprises a compressible component 34 that is arranged to shrink by the positive pressure shock taking place in the internal cavity 12. In other words, the compressible component 34 reduces its size as a result of rising pressure conveyed on its outer surface. The compressible component 34 may be made of e.g. a compressible foam material comprising closed cells. Also this kind of shock absorbing element 20 is inexpensive and easy to realize in various shapes.

Alternatively, the compressible component 34 may comprise a gas filled bottle or balloon, a cylinder and a piston therein with spring preload, an open cell foam wrapped into a membrane, or just partly closed cavity forming a gas bubble inside, i.e. like a diving bell, etc.

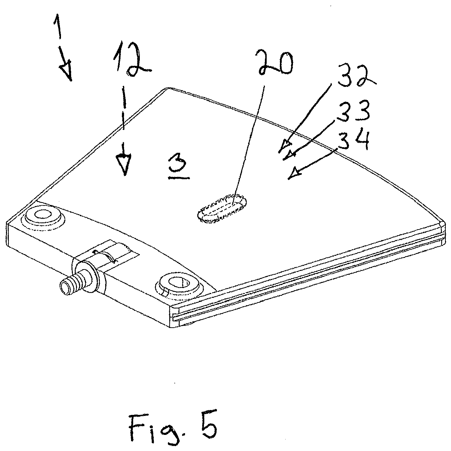

According to an embodiment, the shock absorbing element 20 is arranged inside the internal cavity 12. An example of this embodiment is shown in Figure 5 where a box-like shock absorbing element 20 is arranged in the middle of the internal cavity 12. The absorbing element 20 has a compressible structure, the element thus being arranged to contract by the positive pressure shock. An advantage is that the volume of the internal cavity 12 is limited by the element 20, and following this the counterwashing or backwashing of the filter element 1 acts faster.

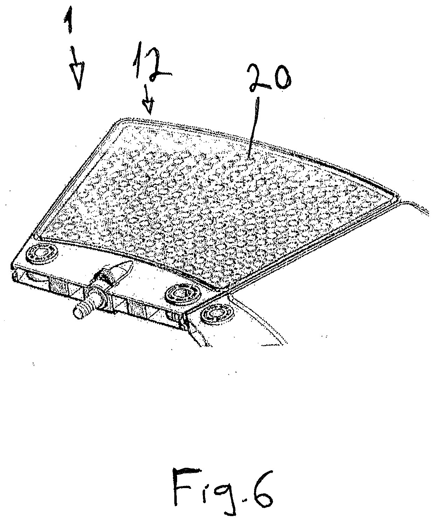

According to another embodiment of the shock absorbing element 20 being arranged inside the internal cavity 12, the shock absorbing element 20 is a sheet. An example of this embodiment is shown in Figure 6.

The sheet-like pressure shock absorbing element 20 may comprise e.g. compressible closed cell foam material. An advantage is that the volume of the internal cavity 12 is limited, and furthermore, an easier manufacturing and simpler structure of the filter element 1 because there is no need for complicated structures in the internal cavity 12.

Alternatively, the shock absorbing element 20 being arranged inside the internal cavity 12 may comprise a gas filled bottle or balloon, a cylinder and a piston therein with spring preload, an open cell foam wrapped into a membrane, or just partly closed cavity forming a gas bubble inside, i.e. like a diving bell, etc.

According to still another embodiment, the filter element 1 comprises at least one frame member 4 the material and/or the structure of which is arranged reversibly deform under the positive pressure shock taking place in the internal cavity 12. In other words, the pressure shock absorbing element 20 is created in the structure of the frame member 4. An advantage is that there is no need for an additional shock absorber structures or elements. The deforming material or structure of the frame member 4 may be arranged e.g. in the connecting member end 10 and/or in other parts of the frame member 4.

It is to be noted here that the filter element 1 may comprise not only one but two or more shock absorbing elements 20.

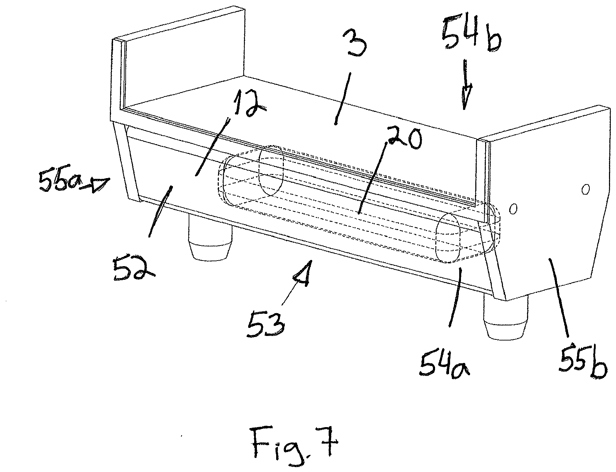

Figure 7 is a perspective top view illustrating a belt filter element. According to an embodiment, the filter element 1 is a filter element of a belt filter apparatus. The filter element 1 comprises a vacuum box 52 that comprises a bottom 53, two opposite long sides 54a, 54b, two opposite end walls 55a, 55b, and a filter member 3.

The vacuum box 52 comprises an internal cavity 12 into which vacuum or negative pressure is applied. When the filter element 1 is submerged in the slurry basin, the cake forms onto the filter member of the filter element 1 by influence of the negative pressure in the internal cavity 12.

There is a shock absorbing element 20 arranged in the internal cavity 12. It is to be noted that a belt filter element may comprise any kind of shock absorbing element(s) 20 described in this description.

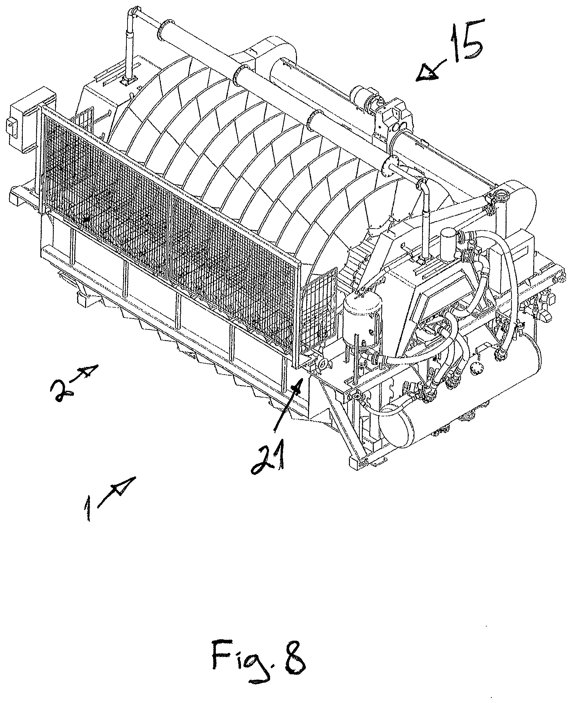

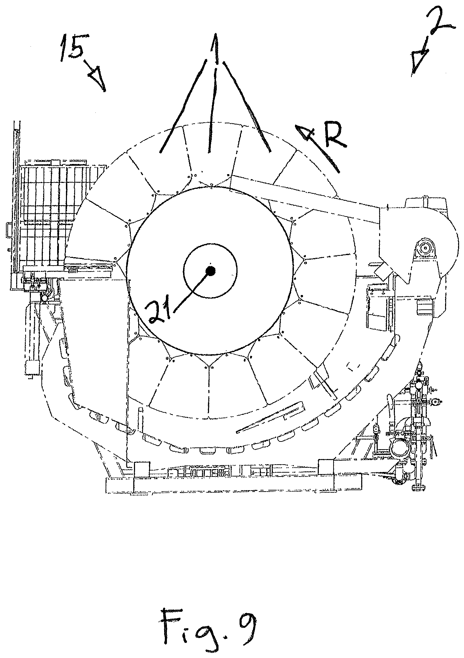

Figure 8 is a perspective top view illustrating a disc filter apparatus, and Figure 9 is a side view illustrating the disc filter apparatus shown in Figure 8.

The filter apparatus 2 comprises a filter 15 consisting of several consecutive co-axial filter discs arranged in line co-axially around the central shaft 21 of the filter 15.

The filter 15 is supported by bearings on a frame of the filter apparatus and is rotatable about the longitudinal axis of the central shaft 21 such that the lower portion of the filter 15 is submerged in a slurry basin located below the filter 15. The filter is rotated by e.g. an electric motor.

The number of the filter discs may range from 2 to 20, for example. The filter apparatus shown in Figure 8 comprises twelve (12) filter discs. The outer diameter of the filter 15 may be ranging from 1.5 m to 4 m, for example. Examples of commercially available disc filters include Ceramec CC filters, models CC-6, CC-15, CC-30, CC-45, CC-60, CC-96 and CC-144 manufactured by Outotec Inc.

All the filter discs can be preferably essentially similar in structure. Each filter disc may be formed of a number of individual sector-shaped filter elements 1 discussed earlier in this description. The filter elements 1 are mounted circumferentially in a radial planar plane around the central shaft 21 to form an essentially continuous and planar disc surface. The number of the filter plates in one filter disc may be 12 or 15, for example. At least some, or preferably all, of the filter elements of the disc filter apparatus comprises the shock absorbing element(s) described in this description.

Operation of the disc filter apparatus may be controlled by a filter control unit, such as a Programmable Logic Controller, PLC.

Disc filter apparatuses are used for the filtration of relatively free filtering suspensions on a large scale, such as the dewatering of mineral concentrates. The dewatering of mineral concentrates requires large capacity in addition to producing a cake with low moisture content. Such large processes are commonly energy intensive and means to lower the specific energy consumption are needed.

As the central shaft 21 is fitted so as to revolve, each filter element 1 is, in its turn, displaced into a slurry basin and further, as the central shaft 21 revolves, rises out of the basin. When the filter member 3 is submerged in the slurry basin where, under the influence of the vacuum, the cake forms onto the filter member 3. The cake can be discharged by e.g. by scraping, after which the cycle begins again. The capillary filter member 3, when wetted, does not allow air to pass through which decreases the necessary vacuum level, enables the use of smaller vacuum pumps and, consequently, yields significant energy savings.

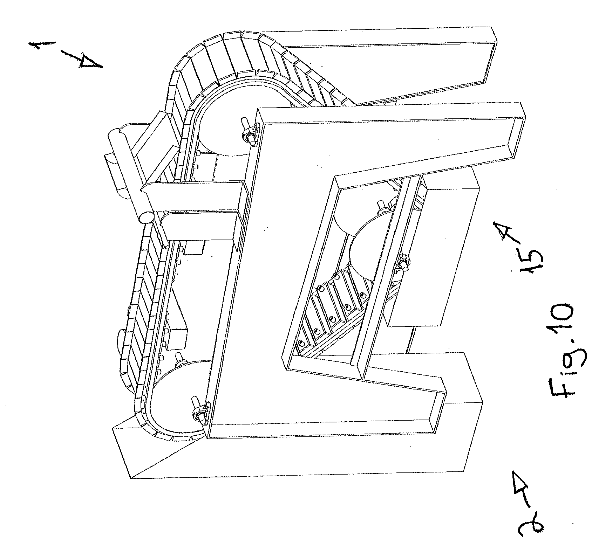

Figure 10 illustrates in a side view, still another filter apparatus 2. The filter apparatus 2 here is a vacuum belt filter apparatus.

The filter 15 of the vacuum belt filter apparatus comprises an endless belt comprising a multitude of individual filter elements 1 described already in connection with Figure 5 and arranged one after another in the longitudinal direction of the belt. The features of the filter element 1 are described earlier in this description. The filter elements 1 follow one after another along the whole length of the belt, but for sake of simplicity, all the filter elements 1 have not been illustrated.

At least some, or preferably all, of the filter elements of the belt filter apparatus comprises the shock absorbing element(s) described in this description.

When the filter element of the belt filter apparatus is submerged in the slurry basin, a cake forms onto the filter member 3 due to the vacuum within the vacuum box 52. The cake can be discharged by e.g. scraping, after which the cycle begins again.

The capillary filter member 3, when wetted, does not allow air to pass through which decreases the necessary vacuum level, enables the use of smaller vacuum pumps and, consequently, yields significant energy savings.

It will be obvious to a person skilled in the art that, as the technology advances, the inventive concept can be implemented in various ways. The invention and its embodiments are not limited to the examples described above but may vary within the scope of the claims.

## Claims

1. A filter element comprising
at least one filter member forming a capillary filter,
an internal cavity in fluid communication with the filter member, and
a flow channel arranged in fluid communication with the internal cavity for placing the internal cavity in fluid communication with a drainage line of the filter apparatus,
the filter element further comprising a pressure shock absorbing element that is reversibly deformable and connected to the internal cavity,
the pressure shock absorbing element arranged to change its volume under a positive pressure shock taking place in the internal cavity, wherein , the pressure shock absorbing element is arranged out of the internal cavity of the filter element,
the shock absorbing element comprising a housing and an inner room in said housing,
the inner room being in a fluid communication with the internal cavity, the housing being arranged to expand by the positive pressure shock taking place in the internal cavity, **characterized in that**
the shock absorbing element is a hollow reservoir made of a polymer material.

2. The filter element according to claim 1, wherein the shock absorbing element is arranged in the connecting member end of the filter element.

3. The filter element according to any one of the preceding claims, wherein the bubble point of the filter member is at least 0.2 bar.

4. The filter element according to any one of the preceding claims, wherein the filter element is a filter element of a belt filter apparatus.

5. The filter element according to any one of the preceding claims, comprising
at least one filter member comprising a permeable membrane layer and having a first filter surface for receiving a pressure and directed towards an internal cavity arranged inside the filter element, and a second filter surface for receiving solid particles filtered from a feed, wherein the second filter surface is forms a capillary filter, and
a frame member arranged to support the at least one filter member in such a manner that the internal cavity is formed.

6. The filter element according to claim 5, wherein the frame member comprises at least one support part for supporting the filter member.

7. The filter element according to claim 6, wherein the frame member comprises an edge part comprising a peripheral edge surface that is arranged at an angle in relation to the first filter surface.

8. The filter element according to any one of the preceding claims, wherein the filter member comprises a ceramic material or a composition comprising a ceramic material.

9. The filter element according to claim 8, wherein the ceramic material comprises at least one of the following: alumina, aluminium silicates, silicon carbide and titania.

10. The filter element according to any one of claims 2 to 9, wherein the frame member comprises a polymer material or a composition comprising a polymer material.

11. The filter element according to claim 10, wherein the polymer material comprises thermoplastic, such as
polyamide, polypropylene, polysulphone, polyethersulphone, polyphenylene oxide, polyphenylene sulphide, acrylo butadiene styrene, polybutylene terephthalatate, HDPE, PC and other polyolefin.

12. A filter apparatus, comprising at least one filter element according to any one of claims 1 to 11, wherein the filter apparatus comprises at least one of the following: a disc filter apparatus, and a belt filter apparatus.

## Patentansprüche

1. Filterelement, umfassend:
mindestens ein Filterelement, das ein Kapillarfilter bildet,
einen internen Hohlraum, der in Fluidverbindung mit dem Filterelement steht, und
einen Strömungskanal, der in Fluidverbindung mit dem internen Hohlraum angeordnet ist, um den internen Hohlraum in Fluidverbindung mit einer Abflussleitung der Filtervorrichtung zu bringen,
wobei das Filterelement ferner ein druckstoßabsorbierendes Element umfasst, das reversibel verformbar und mit dem internen Hohlraum verbunden ist,
wobei das druckstoß-absorbierende Element dafür ausgelegt ist, sein Volumen unter einem positiven Druck zu ändern, der im internen Hohlraum auftritt, wobei
das druckstoß-absorbierende Element außerhalb des internen Hohlraums des Filterelementes angeordnet ist,
wobei das stoßabsorbierende Element ein Gehäuse und einen Innenraum im Gehäuse umfasst,
wobei der Innenraum in Fluidkommunikation mit dem internen Hohlraum steht, wobei das Gehäuse dafür ausgelegt ist, sich durch den positiven Druckstoß auszudehnen, der im internen Hohlraum auftritt, **dadurch gekennzeichnet, dass**
das stoßabsorbierende Element ein hohles Reservoir ist, das aus einem Polymermaterial hergestellt ist.

2. Filterelement nach Anspruch 1, wobei das stoßabsorbierende Element im Verbindungselement-Ende des Filterelementes angeordnet ist.

3. Filterelement nach einem der vorherigen Ansprüche, wobei der Siedepunkt des Filterelementes mindestens 0,2 bar beträgt.

4. Filterelement nach einem der vorherigen Ansprüche, wobei das Filterelement ein Filterelement einer Bandfiltervorrichtung ist.

5. Filterelement nach einem der vorherigen Ansprüche, umfassend
mindestens ein Filterelement, das eine durchlässige Membranschicht enthält und eine erste Filterfläche zum Aufnehmen eines Drucks hat und zu einem internen Hohlraum ausgerichtet ist, der innerhalb des Filterelementes angeordnet ist, und eine zweite Filterfläche zum Aufnehmen von festen Teilchen, die aus einer Einspeisung herausgefiltert werden, wobei die zweite Filterfläche ein Kapillarfilter bildet, und
ein Rahmenelement, das dafür ausgelegt ist, das mindestens eine Filterelement derart zu stützen, dass der interne Hohlraum gebildet wird.

6. Filterelement nach Anspruch 5, wobei das Rahmenelement mindestens einen Stützteil zum Abstützen des Filterelementes umfasst.

7. Filterelement nach Anspruch 6, wobei das Rahmenelement einen Kantenteil enthält, der eine periphere Kantenfläche umfasst, die unter einem Winkel gegenüber der ersten Filterfläche angeordnet ist.

8. Filterelement nach einem der vorherigen Ansprüche, wobei das Filterelement ein keramisches Material oder eine Zusammensetzung umfasst, die ein keramisches Material enthält.

9. Filterelement nach Anspruch 8, wobei das keramische Material mindestens eines aus den folgenden umfasst: Aluminiumoxid, Aluminiumsilikate, Siliziumkarbid und Titanic.

10. Filterelement nach einem der Ansprüche 2 bis 9, wobei das Rahmenelement ein Polymermaterial oder eine Zusammensetzung umfasst, die ein Polymermaterial enthält.

11. Filterelement nach Anspruch 10, wobei das Polymermaterial Kunststoff umfasst, wie zum Beispiel
Polyamid, Polypropylen, Polysulfon, Polyethersulfon, Poly-phenylenoxid, Polyphenylensulfid, Acrylobutadienstyrol, Polybutylenterephthalatat, HDPE, PC und andere Polyolefine.

12. Filtervorrichtung, die mindestens ein Filterelement nach einem der Ansprüche 1 bis 11 umfasst, wobei die Filtervorrichtung mindestens ein Element der folgenden enthält: eine Scheibenfiltervorrichtung und eine Bandfiltervorrichtung.

## Revendications

1. Elément de filtre comprenant
au moins un organe de filtre formant un filtre capillaire,
une cavité interne en communication de fluide avec l'organe de filtre, et
un canal d'écoulement disposé en communication de fluide avec la cavité interne pour placer la cavité interne en communication de fluide avec une conduite de drainage du dispositif de filtre,
l'élément de filtre comprenant en outre un élément absorbant les chocs de pression qui est déformable de manière réversible et connecté à la cavité interne,
l'élément absorbant les chocs de pression est disposé de manière à changer de volume lorsqu'un choc de pression positive a lieu dans la cavité interne,
dans lequel
l'élément absorbant les chocs de pression est disposé en-dehors de la cavité interne de l'élément de filtre,
l'élément absorbant les chocs comprend un boîtier et un espace intérieur dans ledit boîtier,
l'espace intérieur est en communication de fluide avec la cavité interne, le boîtier étant disposé pour se dilater par le choc de pression positive qui a lieu dans la cavité interne,
**caractérisé en ce que** l'élément absorbant les chocs est un réservoir creux fait d'un matériau polymère.

2. Elément de filtre selon la revendication 1, dans lequel l'élément absorbant les chocs est disposé dans l'extrémité d'organe de connexion de l'élément de filtre.

3. Elément de filtre selon l'une quelconque des revendications précédentes, dans lequel le point de bulle de l'organe de filtre est d'au moins 0,2 bar.

4. Elément de filtre selon l'une quelconque des revendications précédentes, lequel élément de filtre est un élément de filtre d'un dispositif de filtre à bandes.

5. Elément de filtre selon l'une quelconque des revendications précédentes, comprenant
au moins un organe de filtre comprenant une couche de membrane perméable et ayant une première surface de filtre pour recevoir une pression et dirigée vers une cavité interne disposée à l'intérieur de l'élément de filtre, et une deuxième surface de filtre pour recevoir des particules solides filtrées à partir d'une charge, laquelle deuxième surface de filtre forme un filtre capillaire, et
un organe de bâti disposé de manière à supporter l'au moins un organe de filtre de telle manière que la cavité interne soit formée.

6. Elément de filtre selon la revendication 5, dans lequel l'organe de bâti comprend au moins une partie de support pour supporter l'organe de filtre.

7. Elément de filtre selon la revendication 6, dans lequel l'organe de bâti comprend une partie de bord comprenant une surface de bord périphérique qui est disposée selon un certain angle par rapport à la première surface de filtre.

8. Elément de filtre selon l'une quelconque des revendications précédentes, dans lequel l'organe de filtre comprend un matériau céramique ou une composition comprenant un matériau céramique.

9. Elément de filtre selon la revendication 8, dans lequel le matériau céramique comprend au moins l'un des suivants : alumine, silicates d'aluminium, carbure de silicium, et oxyde de titane.

10. Elément de filtre selon l'une quelconque des revendications 2 à 9, dans lequel l'organe de bâti comprend un matériau polymère ou une composition comprenant un matériau polymère.

11. Elément de filtre selon la revendication 10, dans lequel le matériau polymère comprend un thermoplastique, tel que le polyamide, le polypropylène, la polysulfone, la polyéthersulfone, le poly(oxyde de phénylène), le poly(sulfure de phénylène), l'acrylobutadiène-styrène, le poly(téréphtalate de butylène), le HDPE, le PC et une autre polyoléfine.

12. Dispositif de filtre comprenant au moins un élément de filtre selon l'une quelconque des revendications 1 à 11, lequel dispositif de filtre comprend au moins l'un des suivants : un dispositif de filtre à disques, et un dispositif de filtre à bandes.
